(19) Europäisches Patentamt / European Patent Office / Office européen des brevets

(11) **EP 3 468 183 B1**

(12) **EUROPEAN PATENT SPECIFICATION**

(45) Date of publication and mention
of the grant of the patent:
**06.04.2022 Bulletin 2022/14**

(21) Application number: **17805880.6**

(22) Date of filing: **02.06.2017**

(51) International Patent Classification (IPC):
*H04N 17/00* (2006.01)    *H04N 5/067* (2006.01)
*H04N 21/43* (2011.01)    *H04N 21/44* (2011.01)

(52) Cooperative Patent Classification (CPC):
**H04N 17/004; H04N 21/43072; H04N 21/4394;**
**H04N 21/44008**

(86) International application number:
**PCT/CN2017/086916**

(87) International publication number:
**WO 2017/206935 (07.12.2017 Gazette 2017/49)**

(54) **SYSTEM AND METHOD FOR AUDIO AND VIDEO SYNCHRONIZATION TEST**

SYSTEM UND VERFAHREN FÜR AUDIO- UND VIDEOSYNCHRONISATIONSTEST

SYSTÈME ET PROCÉDÉ D'EXÉCUTION DE TESTS DE SYNCHRONISATION AUDIO ET VIDÉO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.06.2016 CN 201610392099**

(43) Date of publication of application:
**10.04.2019 Bulletin 2019/15**

(73) Proprietor: **THE THIRD RESEARCH INSTITUTE OF
MINISTRY OF PUBLIC SECURITY
Shanghai 200031 (CN)**

(72) Inventors:
• **RONG, Ling**
**Shanghai 200031 (CN)**
• **WANG, Lijuan**
**Shanghai 200031 (CN)**
• **BAO, Yiming**
**Shanghai 200031 (CN)**
• **YANG, Zhuying**
**Shanghai 200031 (CN)**

(74) Representative: **Cabinet Chaillot
16/20, avenue de l'Agent Sarre
B.P. 74
92703 Colombes Cedex (FR)**

(56) References cited:
CN-A- 101 796 812     CN-A- 104 023 229
CN-A- 105 100 794     CN-A- 106 060 534
US-A1- 2006 127 053     US-A1- 2012 287 288
US-A1- 2014 307 107     US-A1- 2014 347 499

**Description**

**BACKGROUND OF THE INVENTION**

**1. Field of the Invention**

The invention relates to a technical field of testing of audio and video devices, and more particularly, to a system and a method for audio and video synchronization test.

**2. Description of the Related Art**

In an audio and video synchronous transmission system, there are many digital end-to-end devices which adopt encryption technology or have no standard interfaces or have transfer protocols that are non-standard. However, in the existing digital end-to-end devices, since delay generated from the transmission of audio and video data is different, defect of lip being out of sync with sound during a video call cannot be avoided, and in particular, in an application, such as in a real-time remote audio and video communication having higher requirements on audio and video synchronization performance, user experience of the audio and video devices will be greatly lowered; for example, in a building intercom system, which is the technical protection products for household safety, when the owner at the indoor receiver responds to sound after a visitor presses a room number to rings a doorbell in a guest caller at the building, it is desirable to see the real-time image of the visitor, such that it is easier for the owner to identify who the caller is. Accordingly, a device capable of achieving lip sync is required for enabling the owner at the indoor receiver to hear the voice and see the appearance of the caller. And once lip and sound are out of sync, user experience will be lowered, and the owner cannot identify who the call is, therefore putting personal and property security at risk.

As present, in order to improve the audio and video synchronization performance of the remote audio and video communication equipment have been developed, or to test the audio and video synchronization performance of the remote audio and video communication equipment ready for wide application in the market, electric signal and image signal testing method is normally used for testing (lip sync testing etc.) However, since interfaces and video equipments used therein may be non-standard, only end-to-end full range image signal can be used for testing, which in turn makes the testing effect less satisfactory, that is, it cannot accurately acquire the audio and video synchronization performance of the device to be tested, and thus, and thus, it is also impossible to evaluate the performance of a product developed or to be promoted for wide application.

US2006/127053A1 refers to method and apparatus to automatically adjust audio and video synchronization, the controller 223 determines a final audio delay amount by subtracting the measured audio delay amount from the measured video delay amount

**SUMMARY OF THE INVENTION**

Aiming at the problems in the prior art, the present invention provides a system and a method applicable for audio and video synchronization test of the digital end-to-end devices which adopt encryption technology or have no standard interfaces or have transfer protocols that are non-standard, and the technical solution is as follows:
a system for audio and video synchronization test, applied to a performance test of an audio and video transmission and playing device to be tested, especially applied to the testing of audio and video synchronization performance of real-time remote audio and video communication (such as building visual intercom, one of the household security and protection equipments) having higher requirements on audio and video synchronization performance, the system comprising:

> a video signal generating apparatus, disposed in the vicinity of the device to be tested, configured for generating an image test signal; the device to be tested collects and transmits the image test signal to a first output end of the device to be tested, to output an image transmission test signal;
> a video delay test apparatus, collecting the transmission image test signal output by the device to be tested and a real-time image test signal generated by the video signal generating apparatus currently and comparing the same, so as to obtain a video delay time of the device to be tested;
> an audio signal generating apparatus, disposed in the vicinity of the device to be tested, configured for generating a sound test signal; the device to be tested collects and transmits the sound test signal to a second output end of the device to be tested, to output a transmission sound test signal;
> an audio delay test apparatus, collecting the transmission sound test signal output by the device to be tested and a real-time sound test signal currently generated by the audio signal generating apparatus and comparing the same, so as to obtain an audio delay time of the device to be tested; and

a processing apparatus, connected to the video delay test apparatus and the audio delay test apparatus, respectively, to obtain a time difference between the video delay time and the audio delay time;

characterized in that the video signal generating apparatus (11) comprises a LED image generator (11a), the LED image generator (11a) comprises at least a line of N LED lights arranged along a straight line; and each of the N LED lights is illuminated in sequence at a frequency of f in the same direction along which the LED lights extend, and illumination time for each of the LED lights is 1/ (N*f), and the video delay time is:

$$T_3 = \frac{n}{f} + (n-1) * \frac{1}{N*f}, n \geq 1$$

$T_3 = 0$, n=0;

wherein, $T_3$ is the video delay time, N is a positive integer greater than or equal to 5, n is a sequence number difference between the sequence of the LED light illuminated by a pulse image of the real-time image test signal and the sequence of the LED light illuminated by the pulse image of the transmission image test signal, and n is a natural number, and an error range of $T_3$ is $0\text{-}2*\frac{1}{N*f}$.

As a preferred embodiment, the abovementioned system for audio and video synchronization test further comprises:

a determination apparatus, connected to the processing apparatus;

wherein the time difference and a data table corresponding to audio and video synchronization performance parameters prestored in the determination apparatus, and the determination apparatus receives the time difference and retrieves the audio and video synchronization parameters corresponding to the time difference, from the data table, according to the time difference, and outputs the retrieved audio and video synchronization parameters;

the processing apparatus computes the time difference according to a formula $\Delta T = T_1 - T_2$;

wherein $\Delta T$ is the time difference, $T_1$ is the audio delay time, $T_2$ is the video delay time, and units of time of $\Delta T$ , $T_1$ and $T_2$ are the same;

when a value of $\Delta T$ is 0, the audio and video synchronization performance parameters output by the determination apparatus are the optimal parameters of the audio and video synchronization performance;

when the value of $\Delta T$ is a negative value, the audio and video synchronization performance parameters output by the determination apparatus are $\Delta T$ millisecond obtained by a video signal lagging behind an audio signal simultaneously transmitted by the device to be tested; and

when the value of $\Delta T$ is a positive value, the audio and video synchronization performance parameters output by the determination apparatus are $\Delta T$ millisecond obtained by the audio signal lagging behind the video signal simultaneously transmitted by the device to be tested;

and wherein all the units of time of $\Delta T$ , $T_1$ and $T_2$ are millisecond.

As a preferred embodiment of the abovementioned system for audio and video synchronization test, the processing apparatus obtains the time difference based on the audio delay time.

As a preferred embodiment of the above-mentioned the system for audio and video synchronization test, the device to be tested comprises an image acquisition unit, a video transmission unit and an image display unit, and the video delay test apparatus comprises a video acquisition unit, a first comparison unit and a first computing unit;

wherein the LED image generator generates the image test signal; the image acquisition unit collects the image test signal and the video transmission unit transmits the image test signal to the image display unit for displaying the transmission image test signal; the video acquisition unit simultaneously collects a real-time image test signal generated by the LED image generator and the transmission image test signal currently displayed in the image display unit; the first comparison unit compares the real-time image test signal collected and the transmission image test signal; and the first computing unit obtains the video delay time according to a comparison result output by the first comparison unit, and outputs the video delay time to the processing apparatus.

As a preferred embodiment of the above-mentioned the system for audio and video synchronization test, the value of frequency f, at which the LED lights are illuminated, is greater than or equal to the value of the human-vision resolution frame rate, and a value of the frame rate of acquisition of image by the image acquisition unit is greater than the value of the frequency f.

As a preferred embodiment of the above-mentioned the system for audio and video synchronization test, the audio signal generating apparatus comprises an audio signal generator; the device to be tested further comprises a sound acquisition unit, an audio transmission unit and a sound playing unit; and the audio delay test apparatus comprises an audio acquisition unit and an audio analysis unit;

wherein the audio signal generator generates the sound test signal; the sound acquisition unit collects the sound test signal and the audio transmission unit transmits the sound test signal to the sound playing unit for outputting the transmission sound test signal; the audio acquisition unit simultaneously collects a real-time sound test signal generated by the audio signal generator and a transmission sound test signal currently output by the sound playing unit; after analyzing and performing processing on the real-time sound test signal collected by the audio acquisition unit and the transmission sound test signal, the audio analysis unit outputs the audio delay time to the processing apparatus.

As a preferred embodiment of the above-mentioned the system for audio and video synchronization test, the audio signal generating apparatus further comprises a simulation mouth for equalizing the sound test signal generated by the audio signal generator, and the sound acquisition unit collects the equalized sound test signal; and

the audio acquisition unit comprises a free-field microphone, the audio analysis unit comprises an audio analyzer, and the audio analyzer outputs the audio delay time based on the transmission sound test signal collected by the free-field microphone;

the device to be tested includes two hands-free terminals of a building visual intercom equipment, an angle between the audio signal generator and the simulation mouth configured for generating the sound test signal, and the free-field microphone and the audio analyzer configured for receiving the sound test signal in the same hands-free terminal is greater than or equal to 32°, and a distance between the simulation mouth and/or the free-field microphone and the hands-free terminal is greater than or equal to 10 cm and less than 50 cm.

The application also provides a method for audio and video synchronization test, applied to a performance test of an audio and video transmission and playing device to be tested, characterized in that the method comprises steps of:

after a video signal generating apparatus generating an image test signal, the device to be tested collecting and transmitting the image test signal to a first output end of the device to be tested, to output a transmission image test signal;

respectively collecting the transmission image test signal output by the device to be tested and a real-time image test signal currently generated by the video signal generating apparatus and comparing the same by using a video delay test apparatus, so as to obtain a video delay time of the device to be tested;

after an audio signal generating apparatus generating a sound test signal, the device to be tested collecting and transmitting the sound test signal to a second output end of the device to be tested, to output a transmission sound test signal;

respectively collecting the transmission sound test signal output by the device to be tested and a real-time sound test signal currently generated by the audio signal generating apparatus and comparing the same by using an audio delay test apparatus, so as to obtain an audio delay time of the device to be tested; and

a processing apparatus receiving and computing a time difference between the video delay time and the audio delay time.

As a preferred embodiment, the abovementioned the method for audio and video synchronization test further comprises steps of:

providing a determination apparatus in which the time difference and a data table corresponding to audio and video synchronization performance parameters are prestored;

the determination apparatus receiving the time difference and retrieving the audio and video synchronization parameters corresponding to the time difference, from the data table, according to the time difference, and outputting the retrieved audio and video synchronization parameters;

the processing apparatus computes the time difference according to a formula $\Delta T=T_1-T_2$;

wherein $\Delta T$ is the time difference, $T_1$ is the audio delay time, $T_2$ is the video delay time, and units of time of $\Delta T$, $T_1$ and $T_2$ are the same;

when a value of $\Delta T$ is 0, the determination apparatus outputs optimal parameters of the audio and video synchronization performance of the device to be tested;

when the value of $\Delta T$ is a negative value, the determination apparatus outputs $\Delta T$ millisecond obtained by a video signal lagging behind an audio signal simultaneously transmitted by the device to be tested; and

when the value of $\Delta T$ is a positive value, the determination apparatus outputs $\Delta T$ millisecond obtained by the audio signal lagging behind the video signal simultaneously transmitted by the device to be tested;

and wherein all the units of time of $\Delta T$, $T_1$ and $T_2$ are millisecond.

As a preferred embodiment of the above-mentioned the method for audio and video synchronization test, the processing apparatus computes the time difference based on the audio delay time and outputs the time difference.

Compared with the prior art, the invention has the following advantages.

The system and method for audio and video synchronization test according to the present application can be applied to a synchronization test of an audio and video synchronous transmission and playing device, and particularly can achieve a performance test of a real-time audio and video synchronous transmission and playing system (such as a building security and protection system and a video communication system) having higher requirements on audio and video synchronization performance in a simple and accurate way, that is, a video delay time and an audio delay time of the audio and video synchronous transmission and playing device can be simply, accurately and feasibly acquired by respectively using a video delay test apparatus and an audio delay test apparatus, and the audio and video synchronization performance of the audio and video synchronous transmission and playing device can be accurately learned after comparing the acquired video delay time with the acquired audio delay time.

**BRIEF DESCRIPTION OF THE DRAWINGS**

The accompanying drawings, together with the specification, illustrate exemplary embodiments of the present disclosure, and, together with the description, serve to explain the principles of the present invention.

Figure 1 is a schematic structural diagram of a system for audio and video synchronization test according to an embodiment of the present invention;

Figure 2 is a schematic structural diagram of a video delay testing according to an embodiment of the present invention;

Figure 3 is a schematic structural diagram of an audio delay testing according to an embodiment of the present invention;

Figure 4 is a schematic structural diagram of an audio delay testing of a building visual intercom equipment to be tested according to an embodiment of the present invention;

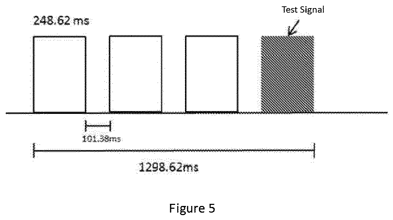

Figure 5 is an audio delay CSS test signal group according to an embodiment of the present invention;

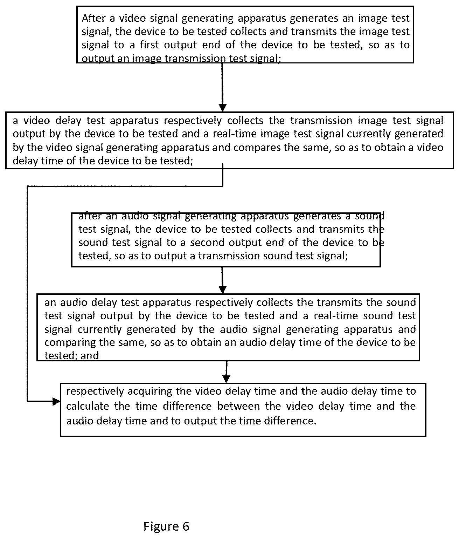

Figure 6 is a flowchart of a method for audio and video synchronization test according to an embodiment of the present invention.

**DETAILED DESCRIPTION**

The present invention will now be described more fully hereinafter with reference to the accompanying drawings, in which exemplary embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," or "includes" and/or "including" or "has" and/or "having" when used herein, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

As used herein, "around", "about" or "approximately" shall generally mean within 20 percent, preferably within 10 percent, and more preferably within 5 percent of a given value or range. Numerical quantities given herein are approximate, meaning that the term "around", "about" or "approximately" can be inferred if not expressly stated.

As used herein, the term "plurality" means a number greater than one.

Hereinafter, certain exemplary embodiments according to the present disclosure will be described with reference to the accompanying drawings.

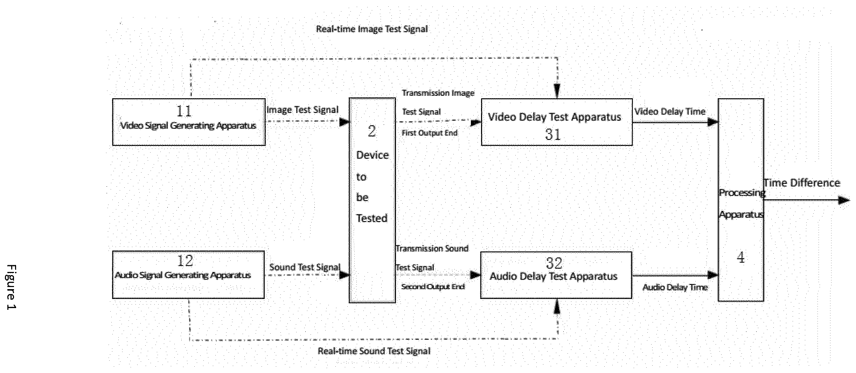

Figure 1 is a schematic structural diagram of a system for audio and video synchronization test according to an embodiment of the present invention. As shown in Figure 1, this embodiment provides a system for audio and video synchronization test, applicable to a performance test of an audio and video transmission and playing device to be tested ( such as video and audio equipments), especially applied to the testing of audio and video synchronization performance of real-time remote audio and video communication (such as building visual intercom equipment, one of the household security and protection equipments) having higher requirements on audio and video synchronization performance, the system comprising:

a video signal generating apparatus 11, disposed in the vicinity of the device to be tested 2 for facilitating the device to be tested 2 to acquire an image test signal displayed in the video signal generating apparatus 11, and configured for generating the image test signal (generally, displaying information by displaying dynamic shade and shadow) such as through a display screen or a matrix of LED lights, wherein after the video signal generating apparatus 11 generates the image test signal, the device to be tested collects 2 and transmits the image test signal to a first output end(an image output end) of the device to be tested 2, to output an image transmission test signal (i.e., image information which is generated after the device to be tested completes collecting and transmitting the image test signal);

a video delay test apparatus 31, disposed in the vicinity of the video signal generating apparatus 11 and the first output end of the device to be tested 2 for an easier collection of the transmission image test signal output by the device to be tested 2 and a real-time image test signal currently generated by the video signal generating apparatus 11, and comparing and/or computing the collected transmission image test signal and the real-time image test signal, so as to obtain and output a video delay time of the device to be tested 2;

an audio signal generating apparatus 12, may also disposed in the vicinity of the device to be tested 2, such that the device to be tested 2 may easily collect a sound test signal generated by the audio signal generating apparatus 12, wherein after the device to be tested 2 collects the sound test signal (the sound test signal is generated in the way that a loudspeaker imitates the human voice)generated by the audio signal generating apparatus 12, the collected sound test signal is transmitted to a second output end (a sound output end, such as an acoustic equipment) of the device to be tested 2, to output a transmission sound test signal (i.e., sound information which is generated after the device to be tested 2 completes collecting and transmitting the sound test signal);

an audio delay test apparatus 32, collecting the transmission sound test signal output by the device to be tested 2 and a real-time sound test signal currently generated by the audio signal generating apparatus 12 and comparing the same, so as to obtain an audio delay time of the device to be tested 2; and

a processing apparatus 4, connected to the video delay test apparatus 31 and the audio delay test apparatus 32, respectively, to obtain a time difference between the video delay time and the audio delay time.

Specifically, the video signal generating apparatus generates 11 the image test signal, and the device to be tested 2 collects and transmits the image test signal to the remote first output end, so as to output the transmission image test signal, then the video delay test apparatus 31 simultaneously collects the transmission image test signal and the real-time image test signal currently displayed in the video signal generating apparatus 11 and compares the same. Since it takes time for the device to be tested 2 to transmit the image test signal, and the transmission image test signal output by the device to be tested 2 is not the real-time image test signal currently displayed in the video signal generating apparatus 11, there is a certain delay in the process of transmission of the image test signal by the device to be tested 2, and a difference signal, obtained by comparing the collected transmission image test signal and the real-time image test signal, may obtain the video delay time of the device to be tested 2 based on the rule of the video signal generating apparatus 11 generating the image test signal; similarly, the audio signal generating apparatus generates the sound test signal, and the device to be tested 2 collects and transmits the sound test signal to the remote second output end, so as to output the transmission sound test signal, then the audio delay test apparatus 32 simultaneously collects the transmission sound test signal and the real-time sound test signal currently played in the audio signal generating apparatus 12 and compares the same. Since it takes time for the device to be tested 2 to transmit the sound test signal, and the transmission sound test signal output by the device to be tested 2 is not the real-time sound test signal currently generated by the audio signal generating apparatus 12, there is also a certain delay in the process of transmission of the sound test signal by the device to be tested 2, and a sound difference signal, obtained by comparing the collected transmission sound test signal and the real-time sound test signal, may obtain the audio delay time of the device to be tested 2 based on the rule of the audio signal generating apparatus 12 generating the sound test signal (It should be noted that the step of obtaining the video delay time and the step of obtaining the audio delay time can be executed in any sequence, and can be performed simultaneously without affecting each other); finally, after the processing apparatus 4 acquires the video delay time and the audio delay time, and compares and computes the video delay time and the audio delay time, acquiring the difference time between audio data and video data during the synchronous transmission of audio and video of the device to be tested, and determining the audio and video synchronous performance of the device to be tested 2 according to the difference time.

Preferably, the abovementioned system for audio and video synchronization test further comprises a determination apparatus connected to the processing apparatus 4 (the judging device may be integrated with the processing module or two components become the same component capable of implementing two functions), and the time difference and a data table corresponding to audio and video synchronization performance parameters prestored in the determination apparatus, such that the determination apparatus may retrieves the audio and video synchronization parameters corresponding to the time difference, from the data table, according to the time difference, and outputs the retrieved audio and video synchronization parameters, and may thus to timely output the audio and video synchronization performance of the device to be tested in a quick and vivid manner.

Preferably, in order to easily acquire the time difference (since the video data is generally larger than the audio data, video transmission will normally lag behind audio transmission in the device to be tested), generally, the time difference is calculated based on the video delay time, and how long video lag audio in the audio and video synchronization performance of the device to be tested 2 can be known by subtracting the video delay time from the audio delay time; alternatively, the time delay can also be calculated based on the video delay time, depending on the actual testing requirements.

Hereinafter, take the case that calculation is done based on the audio delay time as an example to illustrate how to obtain the time difference. When obtaining the time difference, the processing apparatus 4 may compute the time difference according to a formula $\Delta T = T_1 - T_2$, wherein $\Delta T$ is the time difference, $T_1$ is the audio delay time, $T_2$ is the video delay time, and unit of time of $\Delta T$, $T_1$ and $T_2$ are the same. For example, when a value of $\Delta T$ is 0, it suggests that audio transmission time delay and video transmission time delay of the device to be tested are the same. Accordingly, the audio and video synchronization performance parameters output by the determination apparatus is the optimal parameters of the audio and video synchronization performance, that is, whatever the delay time is, only if these two delay time are the same can it be determined that the audio and video synchronization performance of the device to be tested is satisfactory, which may be considered as the optimal performance; when the value of $\Delta T$ is a negative value, it suggests that audio transmission time delay is less than video transmission time delay, that is, the audio and video synchronization performance parameters output by the determination apparatus is$\Delta T$ millisecond obtained by a video signal lagging behind an audio signal simultaneously transmitted by the device to be tested; and when the value of $\Delta T$ is a positive value, it suggests that audio transmission time delay is greater than video transmission time delay, that is, the audio and video synchronization performance parameters output by the determination apparatus is$\Delta T$ millisecond obtained by the audio signal lagging behind the video signal simultaneously transmitted by the device to be tested; and wherein all the unit of time of $\Delta T$, $T_1$ and $T_2$ is millisecond.

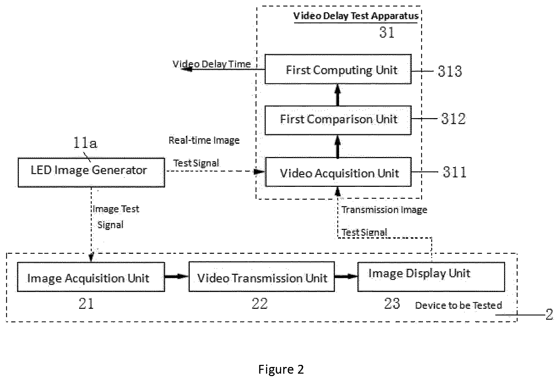

Furthermore, as shown in Figure 2, the video signal generating apparatus 11 may comprise a LED image generator 11a (such as a LED lights array), the device to be tested 2 may comprise an image acquisition unit 21, a video transmission unit 22 and an image display unit 23, and the video delay test apparatus 31 may comprise a video acquisition unit 311, a first comparison unit 312 and a first computing unit 313; wherein the LED image generator 11a generates the image test signal; the image acquisition unit 21 collects the image test signal and the video transmission unit 22 transmits the image test signal to the image display unit 23 for displaying the transmission image test signal; the video acquisition unit 311 simultaneously collects a real-time image test signal generated by the LED image generator 11a and the transmission image test signal currently displayed in the image display unit 23; then the first comparison unit 312 compares the real-time image test signal collected and the transmission image test signal and outputs a comparison result; and the first computing unit 313 obtains the video delay time according to the comparison result output by the first comparison unit 312, and outputs the video delay time to the processing apparatus 4.

Preferably, the LED image generator 11a may comprise at least a line of N LED lights arranged along a straight line (such as LED lights array of N*N, and one row of LED lights may be chosen for testing); and each of the 15 N LED lights is illuminated in sequence at a frequency of f in the same direction along which the LED lights extend, and illumination time for each of the LED lights is 1/ (N*f), while the first comparison unit 312 compares the collected real-time image test signal and the transmission image test signal to determine that n LED lights exist between the real-time image test signal and the transmission image test signal ( that is, n LED lights exist among the illuminated LED lights), then the computing unit may obtain the video delay time according to the following formula,

$$T_3 = \frac{n}{f} + (n-1) * \frac{1}{N * f}, n \geq 1;$$

$T_3 = 0$, $n = 0$;

wherein, $T_3$ is the video delay time, N is a positive integer greater than or equal to 5, n is a sequence number difference between the sequence of the LED light illuminated by a pulse image of the real-time image test signal and the sequence of the LED light illuminated by the pulse image of the transmission image test signal, and n is a

7

$$0-2*\frac{1}{N*f}$$

natural number, and an error range of $T_3$ is between the above.

Preferably, the value of frequency f, at which two adjacent LED lights are illuminated, is greater than or equal to the value of the human-vision resolution frame rate, and a value of the frame rate of acquisition of image by the image acquisition unit should also be greater than the value of the frequency f, otherwise image cannot be collected as desired.

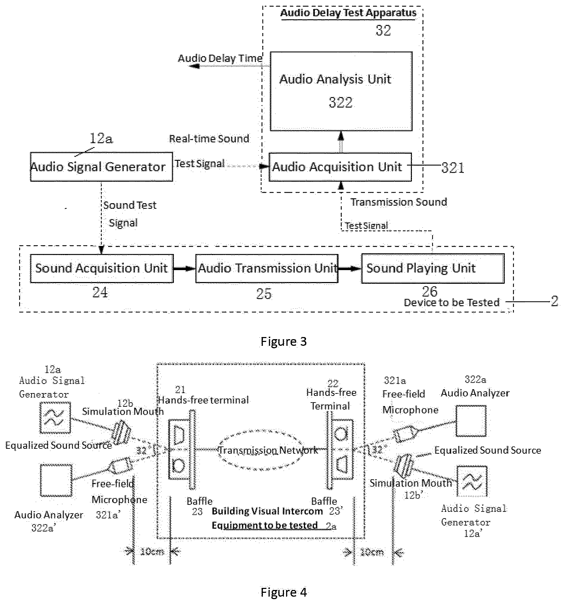

Furthermore, as shown in Figure 3, the audio signal generating apparatus 12 comprises an audio signal generator 12a; the device to be tested 2 further comprises a sound acquisition unit 24, an audio transmission unit 25 and a sound playing unit 26; and the audio delay test apparatus 32 may comprise an audio acquisition unit 321 and an audio analysis unit 322;

wherein the audio signal generator 12a generates the sound test signal ; the sound acquisition unit 321 collects the sound test signal and the audio transmission unit 25 transmits the sound test signal to the sound playing unit 26 for outputting the transmission sound test signal; the audio acquisition unit 321 simultaneously collects a real-time sound test signal generated by the audio signal generator 12a and a transmission sound test signal currently output by the sound playing unit 26; after analysis and calculation of the collected real-time sound test signal and the transmission sound test signal, the audio analysis unit 322 outputs the audio delay time to the processing apparatus 4.

Preferably, the audio signal generating apparatus 12 may further comprise a simulation mouth 12b, 12' for equalizing the sound test signal generated by the audio signal generator 12a, and the sound acquisition unit 24 collects the equalized sound test signal; and the audio acquisition unit 24 comprises a free-field microphone 321a, 321a', the audio analysis unit 322 comprises an audio analyzer 322a, 322a', and the audio analyzer 322a, 322a' may further comprise instrument and equipments displaying the pulse pattern of the real-time image test signal, and after analyzing and comparing the real-time sound test signal and the pulse of the transmission sound test signal collected by the free-field microphone 321a, 321a', the audio analyzer 322a, 322a'outputs the audio delay time of the device to be tested 2.

Hereinafter, lip sync testing of the building visual intercom equipment is illustrated for detailed description. As shown in Figure 4, since two user terminals in the building visual intercom equipment needs communication through dialogue, in the building visual intercom equipment to be tested 2a, two head frames of hands-free terminals 21,22, in which audio delay (testing) is performed (it should be noted that when the device to be tested 2 is a handle terminal equipment, a baffle 23, 23' shown in Figure 4 should be removed, and the simulation mouth and the free-field microphone should be arranged at LRGP (loudness rating guard-ring position) installed on a baffle are provided with the audio signal generator 12a and the simulation mouth 12b, 12' configured for generating the sound test signal, and the free-field microphone and the audio analyzer configured for receiving the sound test signal. Specifically, it comprises two audio delay testing devices, each of the two audio delay testing devices comprising the audio signal generator, the simulation mouth 12b, 12b', the free-field microphone 321a, 321a' and the audio analyzer 322a, 322a'. In order to avoid interference from each other ( that is, the abovementioned audio testing devices), an angle between the audio signal generator 12a, 12a' and the simulation mouth 12b, 12b' configured for generating the sound test signal, and the free-field microphone 12b, 12b' and the audio analyzer 322a, 322a' configured for receiving the sound test signal in the same hands-free terminal 21/22 may be greater than or equal to 32°, and the distance between the simulation mouth 12b, 12b' and/or the free-field microphone 321a, 321a' and the hands-free terminal 21/22 may be greater than or equal to 10cm and less than 50cm ( so as to avoid two extremes, that is, a closer distance will result in interference from each other, while a farther distance will make it impossible for the hands-free terminal to collect enough sound for testing, and specific value may be set according to the performance parameters and testing requirements of device to be tested); preferably, in order to avoid interference from each other (that is, the abovementioned audio testing devices),the two audio testing devices can be asynchronously tested to ensure the accuracy of each testing result, that is, in each test, the audio signal generator 12a/12a' and the simulation mouth 12b/12b' are disposed at one hands-free terminal 21/22 of the building visual intercom equipment to be tested 2a, and the free-field microphone 321a/321a' and the audio analyzer 322a/322a' are disposed at a position adjacent to the other hands-free terminal 22/21.

Only one audio delay testing device is described below for the simplicity of the description. Specifically, the audio signal generator 12a/12a' generates a test unit signal comprising a plurality of (e.g. four units of) CSS (composite source signal) signals, wherein several units (e.g. the first three units) of the CSS signals may be used for training, such that the channel transmission can achieve a normal state, and the remaining units (e.g. the further unit) of CSS signals may be used as test signals, that is, the continuous high level signal of the fourth unit of CSS signals may be used for delay measurement; preferably, the pulse width of each CSS signal is 248.62 ms, and the interval between two adjacent CSS signals is 101.38 ms, so that the length of each test signal is 1298.62 ms (the above specific values can be adjusted to adapt to the actual testing requirements, and the values mentioned above are illustrated for examples only). Specifically, the test signals ( such as the test unit signal comprising four CSS signal)generated by the audio signal generator 12a/12a' is equalized by the simulation mouth 12b/12b' for stimulating the local intercom terminal 21/22 (i.e. the microphone in one hands-free terminal of the building visual intercom equipment to be tested) to work, and the test signals are transmitted to the remote intercom terminal 22/21 (the microphone in one hands-free terminal of the building visual intercom equipment to be tested) for playing via the internet, and the free-field microphone disposed in the vicinity of the hands-free terminal collects the transmitted test signals, to acquire the audio signal, finally by using the audio analyzer 322a/322a', it is possible to determine the audio delay time between the fourth unit of CSS signals (i.e. the test signals) and the signals collected through end-to-end transmission of the system.

The application also provides a method for audio and video synchronization test. Based on the system for audio and video synchronization test, the method may be applied to a performance test of an audio and video transmission and playing device to be tested, especially of a real-time audio and video transmission and playing device having higher requirements on audio and video synchronization performance, the method comprising steps of:

after a video signal generating apparatus 11 generating an image test signal, the device to be tested 2 collecting and transmitting the image test signal to a first output end of the device to be tested 2, to output an image transmission test signal;

respectively collecting the transmission image test signal output by the device to be tested 2 and a real-time image test signal currently generated by the video signal generating apparatus 11 and comparing the same by using a video delay test apparatus 31, so as to obtain a video delay time of the device to be tested 2;

after an audio signal generating apparatus 12 generating a sound test signal, the device to be tested 2 collecting and transmitting the sound test signal to a second output end of the device to be tested 2, to output a transmission sound test signal;

respectively collecting the transmission sound test signal output by the device to be tested 2 and a real-time sound test signal currently generated by the audio signal generating apparatus 12 and comparing the same by using an audio delay test apparatus 32, so as to obtain an audio delay time of the device to be tested 2; and

a processing apparatus 4 receiving and computing a time difference between the video delay time and the audio delay time.

Furthermore, the above method further comprises the steps of:

providing a determination apparatus in which the time difference and a data table corresponding to audio and video synchronization performance parameters are prestored;

the determination apparatus receiving the time difference and retrieving the audio and video synchronization parameters corresponding to the time difference, from the data table, according to the time difference, and outputting the retrieved audio and video synchronization parameters.

It should be noted that the step of obtaining the video delay time and the step of obtaining the audio delay time may be reversed, and can be performed simultaneously without affecting the testing result.

Since the method for audio and video synchronization test in this embodiment can be carried out based on the system for testing the synchronization of audio and video in the above embodiments, and the method and the system may be a product and a method mutually corresponding to each other, the same or similar technical features of the two embodiments may be used in both of the embodiments. However, for the sake of simplicity, descriptions will not be repeated herein, but it should not be construed as a limiting of the application, and those skilled in the art find any technical solution that can be extended without creative work should fall within the scope of this application.

In addition, the audio delay time mentioned in the embodiment of the building visual intercom equipment generally refers to unidirectional transmission time required for transmission of the audio signal from the mouth reference point of the local intercom terminal to each components of the building visual intercom system, and thus to the ear reference point of the remote intercom terminal; the video delay time generally refers to unidirectional transmission time required for transmission of the video signal from a moment when the video signal is captured by a camera of the local intercom terminal, to a moment when the display device of the remote intercom terminal displays the same frame; and the lip sync refers to a time-domain relationship between the transmission of the sound signal and the image signal of the building visual intercom system, and its value can be used to describe the synchronization relationship between the sound signal and the image signal and can be presented within a time range (other embodiments may also be defined with reference to the above semantics). The audio delay and video delay in the standard-compliant building visual intercom equipment shall be not more than 300 ms, and the video frame rate shall not be less than 20 fps. , while during the process of the device to be tested performing lip sync, the time difference between the audio delay time and the video delay time ranges from -90ms to +185ms, that is, when the system is transmitting audio signal and the video signal at the same time, time for the output audio signal being allowed to advance the corresponding video signal should not exceed 90 ms, and the lag time should not exceed 185 ms.

At the same time, when performing testing of audio and video synchronization performance on building visual intercom equipment, in the audio delay testing, environment noise should not exceed 40 dB. In the video delay testing, the EUT (equipment under test), namely, the intercom equipment, should be in a normal image transmission state. When the audio communication of the EUT cannot be cut off and the audio/video synchronization test is required, it must be ensured that they will not cause the change of the video characteristic parameter and/or the audio characteristic parameter.

For example, in video frame rate, video delay and lip sync test, LED image generator may be served as a signal source. And it should be noted that the LED image signal generator should be placed directly in front of a video capture device, and by adjusting the distance between the LED matrix and a video receiving device, the LED matrix images on the video receiving device can be full of the screen at a horizontal axis and a vertical axis, and images on the screen of the video receiving device should focus.

Preferably, the abovementioned LED image generator may consist of a $10\times10$ LED array and a programming controller. The LED array may be used to generate an image for measurement, that is, a single LED may be used as a basic unit to sequentially illuminate each LED light in a vertical or horizontal direction, allowing the rendered image to make continuous scrolling. The programming controller can control the LED array to generate varying images at a set frequency. The LED image generator may also have a LED position information display function and has an output interface outputting 2 falling edge synchronization signals. In addition, in order to prevent the influence of audio on the test, the LED image generator can be used to synchronously control the same LED arrays of groups A and B. Specifically, the group A LED array is placed directly in front of the VCU camera as a test signal; and the group B LED array is placed in the display of the intercom terminal, so that the digital camera can shoot the image. At the same time, the digital camera can adjust the video capture frame rate (used in the video delay test) and capture the still image after receiving the start signal (used in lip sync test).

Preferably, when performing the video frame rate test, a continuous change image generated by a line of 10 LED light groups in the middle area of the LED array can be selected as a test signal to activate audio and video communication; then, starting from the frequency of 1 Hz, gradually adjust the setting frequency of the LED image generator from low to high (each LED is activated once per second, the flashing time is l/(10f) s), so that the LED light group will be continuously illuminated in the horizontal direction according to the set. Observing the output image obtained through the transmission of the system in the display screen of the intercom terminal under test, when it is observed that the 10 LED lights group used for testing stops adjustment while remaining stable without scrolling, and that the status keeps for more than 10s, it is confirmed that the status is valid. Finally, recording the frequency of the LED image generator, and the recorded frequency is the frame rate of the detected IP BIS.

Further, the system frame rate (fr), wherein f is used as the setting frequency of the LED image generator, and the LED pattern generator controls the continuously varying image generated by the LED array as a test signal. Then, the video capture device (VCD) is used to capture the image generated by the LED image generator A, and each frame of the digital camera should be able to simultaneously capture the image on the screen of the video receiving device and the image on the LED signal generator B for three seconds. Afterwards, comparing the position of the activated LED light on the LED image signal generator B with the position of the activated LED light on the screen of the video receiving device in the same frame, and calculating the distance between the two positions is n LED lights, and thus to obtain the video delay time. Finally, the measured video delay values are statistically processed and the upper limit of the 90% confidence interval is taken as the video delay Td.

It should be noted that if the BIS can be muted or the volume can be turned down to avoid howling, the test can be performed by placing a LED light on the LED matrix adjacent to the video capture device in front of the video capture device. This will replace the use of LED image generators A and B for testing in the above testing method.

Preferably, during the lip sync test, the audio delay and the video delay test can be performed synchronously, and the test conditions and test methods should satisfy the audio delay and video delay requirements at the same time: First, the audio signal generator should play a continuous CSS signal until the end of the test. The first three units of CSS signals are used for training and the fourth unit of signals is used for audio delay testing (as described in 7.3.3). When high-frequency signal of the fourth unit of signal ends, and the falling edge begins (i.e. 248.62 ms for the CSS signal), the digital camera begins to capture each frame of the image. Therefore, each unit of the CSS signal will measure the audio delay and the video delay at the period of 248.62ms.

Second, the test should last 10s (28 tests), and calculating the video delay using the audio delay method, then controlling the audio analyzer to calculate the audio delay time, and finally calculating the video delay value and audio delay value captured at the same time:

$$\text{lip sync} = \text{video delay} - \text{audio delay (if the value is a negative}$$

$$\text{value, the audio delay time is greater than the video delay time);}$$

similarly, the measured lip sync values are statistically processed and the lower and upper limits of the 90% confidence interval are taken as the forward and backward lip sync measurements, respectively.

In conclusion, the system and method for audio and video synchronization test according to the present application can be applied to a synchronization test of an audio and video synchronous transmission and playing device, and particularly can achieve a performance test of a real-time audio and video synchronous transmission and playing system (such as a building security and protection system and a video communication system) having higher requirements on audio and video synchronization performance in a simple and accurate way, that is, a video delay time and an audio delay time of the audio and video synchronous transmission and playing device can be simply, accurately and feasibly acquired by respectively using a video delay test apparatus and an audio delay test apparatus, and the audio and video synchronization performance of the audio and video synchronous transmission and playing device can be accurately learned after comparing the acquired video delay time with the acquired audio delay time.

The above descriptions are only the preferred embodiments of the invention, not thus limiting the embodiments and scope of the invention. Those skilled in the art should be able to realize that the schemes obtained from the content of specification and drawings of the invention are within the scope of the invention.

## Claims

1. A system for audio and video synchronization test, applied to a performance test of an audio and video transmission and playing device to be tested (2), wherein the system comprises:

   a video signal generating apparatus (11), disposed in the vicinity of the device to be tested (2), configured for generating an image test signal; the device to be tested (2) collects and transmits the image test signal to a first output end of the device to be tested (2), so as to output an image transmission test signal;
   a video delay test apparatus (31), collecting the transmission image test signal output by the device to be tested (2) and a real-time image test signal generated by the video signal generating apparatus (11) currently and comparing the same, so as to obtain a video delay time of the device to be tested (2);
   an audio signal generating apparatus (12), disposed in the vicinity of the device to be tested (2), configured for generating a sound test signal; the device to be tested (2) collects and transmits the sound test signal to a second output end of the device to be tested (2), so as to output a transmission sound test signal;
   an audio delay test apparatus (32), collecting the transmission sound test signal output by the device to be tested (2) and a real-time sound test signal generated by the audio signal generating apparatus (12) currently and comparing the same, so as to obtain an audio delay time of the device to be tested; and
   a processing apparatus (4), connected to the video delay test apparatus (31) and the audio delay test apparatus (32), respectively, so as to obtain a time difference between the video delay time and the audio delay time;
   **characterized in that** the video signal generating apparatus (11) comprises a LED image generator (11a), the LED image generator (11a) comprises at least a line of N LED lights arranged along a straight line; and each of the N LED lights is illuminated in sequence at a frequency of f in the same direction along which the LED lights extend, and illumination time for each of the LED lights is 1/ (N*f), and the video delay time is:

   $$T_3 = \frac{n}{f} + (n-1) * \frac{1}{N*f}, n \geq 1$$

   $T_3 = 0, n = 0$;
   wherein, $T_3$ is the video delay time, N is a positive integer greater than or equal to 5, n is a sequence number difference between the sequence of the LED light illuminated by a pulse image of the real-time image test signal and the sequence of the LED light illuminated by the pulse image of the transmission image test signal, and n is a natural number, and an error range of $T_3$ is $0\text{-}2 * \dfrac{1}{N*f}$ .

2. The system for audio and video synchronization test as claimed in claim 1, further comprising:

   a determination apparatus, connected to the processing apparatus (4);
   wherein the time difference and a data table corresponding to audio and video synchronization performance parameters are prestored in the determination apparatus, and the determination apparatus receives the time difference and retrieves the audio and video synchronization parameters corresponding to the time difference, from the data table, according to the time difference, and outputs the retrieved audio and video synchronization parameters;

the processing apparatus (4) computes the time difference according to a formula $\Delta T = T_1 - T_2$;

wherein $\Delta T$ is the time difference, $T_1$ is the audio delay time, $T_2$ is the video delay time, and units of time of $\Delta T$, $T_1$ and $T_2$ are the same;

when a value of $\Delta T$ is 0, the audio and video synchronization performance parameters output by the determination apparatus are the optimal parameters of the audio and video synchronization performance;

when the value of $\Delta T$ is a negative value, the audio and video synchronization performance parameters output by the determination apparatus are $\Delta T$ millisecond obtained by a video signal lagging behind an audio signal simultaneously transmitted by the device to be tested; and

when the value of $\Delta T$ is a positive value, the audio and video synchronization performance parameters output by the determination apparatus are $\Delta T$ millisecond obtained by the audio signal lagging behind the video signal simultaneously transmitted by the device to be tested;

and wherein all the units of time of $\Delta T$, $T_1$ and $T_2$ are millisecond.

3. The system for audio and video synchronization test as claimed in claim 2, wherein the processing apparatus (4) obtains the time difference based on the audio delay time.

4. The system for audio and video synchronization test as claimed in claim 1, wherein the device to be tested (2) comprises an image acquisition unit (21), a video transmission unit (22) and an image display unit (23), and the video delay test apparatus (31) comprises a video acquisition unit (311), a first comparison unit (312) and a first computing unit (313);

wherein the LED image generator (11a) generates the image test signal; the image acquisition unit (21) collects the image test signal and the video transmission unit (22) transmits the image test signal to the image display unit (23) for displaying the transmission image test signal; the video acquisition unit (311) simultaneously collects a real-time image test signal currently generated by the LED image generator (11a) and the transmission image test signal currently displayed in the image display unit (23); the first comparison unit (312) compares the collected real-time image test signal with the transmission image test signal; and the first computing unit (313) obtains the video delay time according to a comparison result output by the first comparison unit (312), and outputs the video delay time to the processing apparatus (4).

5. The system for audio and video synchronization test as claimed in claim 4, wherein the value of frequency f, at which the LED lights are illuminated, is greater than or equal to the value of the human-vision resolution frame rate, and a value of the frame rate of image collected by the image acquisition unit is greater than the value of the frequency f.

6. The system for audio and video synchronization test as claimed in claim 1, wherein the audio signal generating apparatus (12) comprises an audio signal generator (12a); the device to be tested (2) further comprises a sound acquisition unit (24), an audio transmission unit (25) and a sound playing unit (26); and the audio delay test apparatus (32) comprises an audio acquisition unit (321) and an audio analysis unit (322);

wherein the audio signal generator (12a) generates the sound test signal; the sound acquisition unit (24) collects the sound test signal and the audio transmission unit (25) transmits the sound test signal to the sound playing unit (26) for outputting the transmission sound test signal; the audio acquisition unit (321) simultaneously collects a real-time sound test signal currently generated by the audio signal generator (12a) and a transmission sound test signal currently output by the sound playing unit (26); after analyzing and processing the real-time sound test signal collected by the audio acquisition unit (321) and the transmission sound test signal, the audio analysis unit (322) outputs the audio delay time to the processing apparatus (4).

7. The system for audio and video synchronization test as claimed in claim 6, wherein the audio signal generating apparatus (12) further comprises a simulation mouth (12b, 12b') for equalizing the sound test signal generated by the audio signal generator (12a, 12a'), and the sound acquisition unit (24) collects the equalized sound test signal; and the audio acquisition unit (321) comprises a free-field microphone (321a, 321a'), the audio analysis unit (322) comprises an audio analyzer (322a, 322a'), and the audio analyzer (322a) outputs the audio delay time based on the transmission sound test signal collected by the free-field microphone (321a, 321a');

the device to be tested (2) includes two hands-free terminals (21, 22) of a building visual intercom equipment (2a), an angle between the audio signal generator (12a/12a') and the simulation mouth (12b/12b') configured for generating the sound test signal, and the free-field microphone (321a'/321a) and the audio analyzer (322a'/322a) configured for receiving the sound test signal in the same hands-free terminal (21/22) is greater than or equal to 32°, and a distance between the simulation mouth (12b/12b') and/or the free-field microphone (321a/321a') and the hands-free terminal (21/22) is greater than or equal to 10 cm and less than 50 cm.

8. A method for audio and video synchronization test using the system as claimed in any of claims 1 to 7, **characterized in that** the method comprises steps of:

after a video signal generating apparatus generating (11) an image test signal, the device to be tested (2) collecting and transmitting the image test signal to a first output end of the device to be tested (2), so as to output an image transmission test signal;
respectively collecting the transmission image test signal output by the device to be tested (2) and a real-time image test signal currently generated by the video signal generating apparatus (11) and comparing the same by using a video delay test apparatus (31), so as to obtain a video delay time of the device to be tested (2);
after an audio signal generating apparatus (12) generating a sound test signal, the device to be tested (2) collecting and transmitting the sound test signal to a second output end of the device to be tested (2), so as to output a transmission sound test signal;
respectively collecting the transmission sound test signal output by the device to be tested (2) and a real-time sound test signal currently generated by the audio signal generating apparatus (12) and comparing the same by using an audio delay test apparatus (32), so as to obtain an audio delay time of the device to be tested (2); and
a processing apparatus (4) receiving and computing a time difference between the video delay time and the audio delay time.

9. The method for audio and video synchronization test as claimed in claim 8, further comprising steps of:

providing a determination apparatus in which the time difference and a data table corresponding to audio and video synchronization performance parameters are prestored;
the determination apparatus receiving the time difference and retrieving the audio and video synchronization parameters corresponding to the time difference, from the data table, according to the time difference, and outputting the retrieved audio and video synchronization parameters;
the processing apparatus (4) computes the time difference according to a formula $\Delta T=T_1-T_2$;
wherein $\Delta T$ is the time difference, $T_1$ is the audio delay time, $T_2$ is the video delay time, and units of time of $\Delta T$, $T_1$ and $T_2$ are the same;
when a value of $\Delta T$ is 0, the determination apparatus outputs optimal parameters of the audio and video synchronization performance of the device to be tested;
when the value of $\Delta T$ is a negative value, the determination apparatus outputs $\Delta T$ millisecond obtained by a video signal lagging behind an audio signal simultaneously transmitted by the device to be tested; and
when the value of $\Delta T$ is a positive value, the determination apparatus outputs $\Delta T$ millisecond obtained by the audio signal lagging behind the video signal simultaneously transmitted by the device to be tested;
and wherein all the units of time of $\Delta T$, $T_1$ and $T_2$ are millisecond.

10. The method for audio and video synchronization test as claimed in claim 9, wherein the processing apparatus (4) computes the time difference based on the audio delay time and outputs the time difference.

**Patentansprüche**

1. System zur Audio- und Videosynchronisationsprüfung, angewandt bei einer Leistungsprüfung eines zu prüfenden Audio- und Video-Übertragungs- und Abspielgeräts (2), wobei das System Folgendes umfasst:

eine Videosignalerzeugungsvorrichtung (11), die in der Nähe des zu prüfenden Geräts (2) angeordnet und dafür konfiguriert ist, ein Bildprüfungssignal zu erzeugen, wobei das zu prüfende Gerät (2) das Bildprüfungssignal erfasst und an ein erstes Ausgabeende des zu prüfenden Geräts (2) überträgt, so dass ein Bildübertragungsprüfungssignal ausgegeben wird,
eine Videoverzögerungsprüfungsvorrichtung (31), die das von dem zu prüfenden Gerät (2) ausgegebene Übertragungsbildprüfungssignal und ein gegenwärtig von der Videosignalerzeugungsvorrichtung (11) erzeugtes Echtzeitbildprüfungssignal erfasst und selbige vergleicht, so dass eine Videoverzögerungszeit des zu prüfenden Geräts (2) erzielt wird,
eine Audiosignalerzeugungsvorrichtung (12), die in der Nähe des zu prüfenden Geräts (2) angeordnet und dafür konfiguriert ist, ein Tonprüfungssignal zu erzeugen, wobei das zu prüfende Gerät (2) das Tonprüfungssignal erfasst und an eine zweites Ausgabeende des zu prüfenden Geräts (2) überträgt, so dass ein Übertragungstonprüfungssignal ausgegeben wird,

eine Audioverzögerungsprüfungsvorrichtung (32), die das von dem zu prüfenden Gerät (2) ausgegebene Übertragungstonprüfungssignal und ein gegenwärtig von der Audiosignalerzeugungsvorrichtung (12) erzeugtes Echtzeittonprüfungssignal erfasst und selbige vergleicht, um eine Audioverzögerungszeit des zu prüfenden Geräts zu erzielen, und

eine Verarbeitungsvorrichtung (4), die mit der Videoverzögerungsprüfungsvorrichtung (31) beziehungsweise der Audioverzögerungsprüfungsvorrichtung (32) verbunden ist, um eine zeitliche Differenz zwischen der Videoverzögerungszeit und der Audioverzögerungszeit zu erzielen,

**dadurch gekennzeichnet, dass** die Videosignalerzeugungsvorrichtung (11) einen LED-Bildgenerator (11a) umfasst, wobei der LED-Bildgenerator (11a) mindestens eine Reihe aus N LED-Lämpchen umfasst, die in einer geraden Linie angeordnet sind, und jedes der N LED-Lämpchen in Folge bei einer Frequenz f in der gleichen Richtung erleuchtet wird, in der sich die LED-Lämpchen erstrecken, und die Leuchtzeit für jedes der LED-Lämpchen 1/(N*f) beträgt und die Videoverzögerungszeit Folgendes beträgt:

$$T_3 = \frac{n}{f} + (n-1) * \frac{1}{N*f} , n \geq 1$$

$T_3 = 0, n = 0;$

wobei $T_3$ die Videoverzögerungszeit ist, N eine positive Ganzzahl größer oder gleich 5 ist, n eine Sequenznummerndifferenz zwischen der Position des LED-Lämpchens, das durch ein Impulsbild des Echtzeitbildprüfungssignals erleuchtet wird, und der Position des LED-Lämpchens, das durch das Impulsbild des Übertragungsbildprüfungssignals erleuchtet wird, ist und n eine natürliche Zahl ist und ein Fehlerbereich von $T_3$ $0\text{-}2*\frac{1}{N*f}$ beträgt.

2. System zur Audio- und Videosynchronisationsprüfung nach Anspruch 1, ferner Folgendes umfassend:

eine Bestimmungsvorrichtung, die mit der Verarbeitungsvorrichtung (4) verbunden ist,

wobei in der Bestimmungsvorrichtung die Zeitdifferenz und eine Datentabelle, die Audio- und Videosynchronisationsleistungsparametern entspricht, vorgespeichert sind und die Bestimmungsvorrichtung die Zeitdifferenz empfängt und die Audio- und Videosynchronisationsparameter, die der Zeitdifferenz entsprechen, gemäß der Zeitdifferenz aus der Datentabelle abruft und die abgerufenen Audio- und Videosynchronisationsparameter ausgibt,

die Verarbeitungsvorrichtung (4) berechnet die Zeitdifferenz gemäß einer Formel $\Delta T = T_1 - T_2$,

wobei $\Delta T$ die Zeitdifferenz ist, $T_1$ die Audioverzögerungszeit ist, $T_2$ die Videoverzögerungszeit ist und die Zeiteinheiten von $\Delta T$, $T_1$ und $T_2$ gleich sind,

wenn ein Wert von $\Delta T$ 0 ist, sind die von der Bestimmungseinheit ausgegebenen Audio- und Videosynchronisationsparameter die optimalen Parameter der Audio- und Videosynchronisationsleistung,

wenn der Wert von $\Delta T$ ein negativer Wert ist, sind die von der Bestimmungseinheit ausgegebenen Audio- und Videosynchronisationsparameter $\Delta T$ Millisekunden, erzielt durch ein Videosignal, das einem Audiosignal nachläuft, das gleichzeitig durch das zu prüfende Gerät übertragen wird, und

wenn der Wert von $\Delta T$ ein positiver Wert ist, sind die von der Bestimmungseinheit ausgegebenen Audio- und Videosynchronisationsparameter $\Delta T$ Millisekunden, erzielt durch das Audiosignal, das dem Videosignal nachläuft, das gleichzeitig durch das zu prüfende Gerät übertragen wird,

und wobei alle Zeiteinheiten von $\Delta T$, $T_1$ und $T_2$ Millisekunden sind.

3. System zur Audio- und Videosynchronisationsprüfung nach Anspruch 2, wobei die Verarbeitungsvorrichtung (4) die Zeitdifferenz basierend auf der Audioverzögerungszeit erzielt.

4. System zur Audio- und Videosynchronisationsprüfung nach Anspruch 1, wobei das zu prüfende Gerät (2) eine Bilderfassungseinheit (21), eine Videoübertragungseinheit (22) und eine Bildanzeigeeinheit (23) umfasst und die Videoverzögerungsprüfungsvorrichtung (31) eine Videoerfassungseinheit (311), eine erste Vergleichseinheit (312) und eine erste Berechnungseinheit (313) umfasst,

wobei der LED-Bildgenerator (11a) das Bildprüfungssignal erzeugt, die Bilderfassungseinheit (21) das Bildprüfungssignal erfasst und die Videoübertragungseinheit (22) das Bildprüfungssignal an die Bildanzeigeeinheit (23) überträgt, um das Übertragungsbildprüfungssignal anzuzeigen, die Videoerfassungseinheit (311) gleichzeitig ein gegenwärtig von dem LED-Bildgenerator (11a) erzeugtes Echtzeitbildprüfungssignal und das gegenwärtig in der Bildanzeigeeinheit (23) angezeigte Übertragungsbildprüfungssignal erfasst, die erste Vergleichseinheit (312) das erfasste Echtzeitbildprüfungssignal mit dem Übertragungsbildprüfungssignal vergleicht und die erste Berechnungseinheit (313) die Videoverzögerungszeit gemäß einem von der ersten Vergleichseinheit (312) ausgegebenen Vergleichsergebnis erzielt und die Videoverzögerungszeit an die Verarbeitungsvorrichtung (4) ausgibt.

5. System zur Audio- und Videosynchronisationsprüfung nach Anspruch 4, wobei der Wert der Frequenz f, mit der die LED-Lämpchen erleuchtet werden, größer oder gleich dem Wert der Bildfrequenz in der Auflösung menschlichen Sehens ist und ein Wert der Bildfrequenz des von der Bilderfassungseinheit erfassten Bildes größer als der Wert der Frequenz f ist.

6. System zur Audio- und Videosynchronisationsprüfung nach Anspruch 1, wobei die Audiosignalerzeugungsvorrichtung (12) einen Audiosignalgenerator (12a) umfasst, das zu prüfende Gerät (2) ferner eine Tonerfassungseinheit (24), eine Audioübertragungseinheit (25) und eine Tonabspieleinheit (26) umfasst und die Audioverzögerungsprüfungsvorrichtung (32) eine Audioerfassungseinheit (321) und eine Audioanalyseeinheit (322) umfasst,
wobei der Audiosignalgenerator (12a) das Tonprüfungssignal erzeugt, die Tonerfassungseinheit (24) das Tonprüfungssignal erfasst und die Audioübertragungseinheit (25) das Tonprüfungssignal an die Tonabspieleinheit (26) überträgt, um das Übertragungstonprüfungssignal auszugeben, die Audioerfassungseinheit (321) gleichzeitig ein gegenwärtig von dem Audiosignalgenerator (12a) erzeugtes Echtzeittonprüfungssignal und ein gegenwärtig von der Tonabspieleinheit (26) ausgegebenes Übertragungstonprüfungssignal erfasst, die Audioanalyseeinheit (322) nach dem Analysieren und Verarbeiten des von der Audioerfassungseinheit (321) erfassten Echtzeittonprüfungssignals und des Übertragungstonprüfungssignals die Audioverzögerungszeit an die Verarbeitungsvorrichtung (4) ausgibt.

7. System zur Audio- und Videosynchronisationsprüfung nach Anspruch 6, wobei die Audiosignalerzeugungsvorrichtung (12) ferner eine Simulationsöffnung (12b, 12b') zum Entzerren des von dem Audiosignalgenerator (12a, 12a') erzeugten Tonprüfungssignals umfasst und die Tonerfassungseinheit (24) das entzerrte Tonprüfungssignal erfasst und
die Audioerfassungseinheit (321) ein Freifeldmikrofon (321a, 321a') umfasst, die Audioanalyseeinheit (322) einen Audioanalysator (322a, 322a') umfasst und der Audioanalysator (322a) basierend auf dem von dem Freifeldmikrofon (321a, 321a') erfassten Übertragungstonprüfungssignal die Audioverzögerungszeit ausgibt,
das zu prüfende Gerät (2) zwei Freisprechanschlüsse (21, 22) einer Ausrüstung (2a) einer Videowechselsprechanlage in einem Gebäude beinhaltet, wobei ein Winkel zwischen dem Audiosignalgenerator (12a, 12a') und der Simulationsöffnung (12b, 12b'), die zum Erzeugen des Tonprüfungssignals konfiguriert sind, und dem Freifeldmikrofon (321a', 321a) und dem Audioanalysator (322a', 322a), die zum Empfangen des Tonprüfungssignals an selbigem Freisprechanschluss (21, 22) konfiguriert sind, größer oder gleich 32° ist und ein Abstand zwischen der Simulationsöffnung (12b, 12b') und/oder dem Freifeldmikrofon (321a, 321a') und dem Freisprechanschluss (21, 22) größer oder gleich 10 cm und kleiner als 50 cm ist.

8. Verfahren zur Audio- und Videosynchronisationsprüfung unter Verwendung des Systems nach einem der Ansprüche 1 bis 7, **dadurch gekennzeichnet, dass** das Verfahren folgende Schritte umfasst:

nach dem Erzeugen eines Bildprüfungssignals durch eine Videosignalerzeugungsvorrichtung (11) Erfassen des Bildprüfungssignals durch das zu prüfende Gerät (2) und Übertragen desselben an ein erstes Ausgabeende des zu prüfenden Geräts (2), um ein Bildübertragungsprüfungssignal auszugeben,
jeweiliges Erfassen des von dem zu prüfenden Gerät (2) ausgegebenen Übertragungsbildprüfungssignals und eines von der Videosignalerzeugungsvorrichtung (11) gegenwärtig erzeugten Echtzeitbildprüfungssignals und Vergleichen desselben unter Verwendung der Videoverzögerungsprüfungsvorrichtung (31), um eine Videoverzögerungszeit des zu prüfenden Geräts (2) zu erzielen,
nach dem Erzeugen eines Tonprüfungssignals durch eine Audiosignalerzeugungsvorrichtung (12) Erfassen des Tonprüfungssignals durch das zu prüfende Gerät (2) und Übertragen desselben an ein zweites Ausgabeende des zu prüfenden Geräts (2), um ein Übertragungstonprüfungssignal auszugeben,
jeweiliges Erfassen des von dem zu prüfenden Gerät (2) ausgegebenen Übertragungstonprüfungssignals und eines von der Audiosignalerzeugungsvorrichtung (12) gegenwärtig erzeugten Echtzeittonprüfungssignals und Vergleichen derselben unter Verwendung einer Audioverzögerungsprüfungsvorrichtung (32), um eine Audioverzögerungszeit des zu prüfenden Geräts (2) zu erzielen, und
Empfangen und Berechnen einer Zeitdifferenz zwischen der Videoverzögerungszeit und der Audioverzögerungszeit durch eine Verarbeitungsvorrichtung(4)..

9. Verfahren zur Audio- und Videosynchronisationsprüfung nach Anspruch 8, ferner folgende Schritte umfassend:

Bereitstellen einer Bestimmungsvorrichtung, in der die Zeitdifferenz und eine Datentabelle, die Audio- und Videosynchronisationsleistungsparametern entspricht, vorgespeichert sind,

Empfangen der Zeitdifferenz und Abrufen der Audio- und Videosynchronisationsparameter, die der Zeitdifferenz entsprechen, gemäß der Zeitdifferenz aus der Datentabelle und Ausgeben der abgerufenen Audio- und Videosynchronisationsparameter durch die Bestimmungsvorrichtung,

Berechnen der Zeitdifferenz durch die Verarbeitungsvorrichtung (4) gemäß einer Formel $\Delta T = T_1 - T_2$, wobei $\Delta T$ die Zeitdifferenz ist, $T_1$ die Audioverzögerungszeit ist, $T_2$ die Videoverzögerungszeit ist und die Zeiteinheiten von $\Delta T$, $T_1$ und $T_2$ gleich sind,

wenn ein Wert von $\Delta T$ 0 ist, gibt die Bestimmungseinheit optimale Parameter der Audio- und Videosynchronisationsleistung des zu prüfenden Geräts aus,

wenn der Wert von $\Delta T$ ein negativer Wert ist, gibt die Bestimmungseinheit $\Delta T$ Millisekunden aus, erzielt durch ein Videosignal, das einem Audiosignal nachläuft, das gleichzeitig durch das zu prüfende Gerät übertragen wird, und

wenn der Wert von $\Delta T$ ein positiver Wert ist, gibt die Bestimmungseinheit $\Delta T$ Millisekunden aus, erzielt durch das Audiosignal, das dem Videosignal nachläuft, das gleichzeitig durch das zu prüfende Gerät übertragen wird, und wobei alle Zeiteinheiten von $\Delta T$, $T_1$ und $T_2$ Millisekunden sind.

10. Verfahren zur Audio- und Videosynchronisationsprüfung nach Anspruch 9, wobei die Verarbeitungsvorrichtung (4) die Zeitdifferenz basierend auf der Audioverzögerungszeit berechnet und die Zeitdifferenz ausgibt.

**Revendications**

1. - Système pour test de synchronisation audio et vidéo, appliqué à un test de performance d'un dispositif de transmission et de lecture audio et vidéo à tester (2), le système comprenant :

un appareil de génération de signal vidéo (11), disposé au voisinage du dispositif à tester (2), configuré pour générer un signal de test d'image ; le dispositif à tester (2) collecte et transmet le signal de test d'image à une première extrémité de sortie du dispositif à tester (2), de façon à délivrer en sortie un signal de test de transmission d'image ;

un appareil de test de retard vidéo (31), collectant le signal de test d'image de transmission délivré en sortie par le dispositif à tester (2) et un signal de test d'image en temps réel généré actuellement par l'appareil de génération de signal vidéo (11) et comparant ceux-ci, de façon à obtenir un temps de retard vidéo du dispositif à tester (2) ;

un appareil de génération de signal audio (12), disposé au voisinage du dispositif à tester (2), configuré pour générer un signal de test sonore ; le dispositif à tester (2) collecte et transmet le signal de test sonore à une seconde extrémité de sortie du dispositif à tester (2), de façon à délivrer en sortie un signal de test sonore de transmission ;

un appareil de test de retard audio (32), collectant le signal de test sonore de transmission délivré en sortie par le dispositif à tester (2) et un signal de test sonore en temps réel généré actuellement par l'appareil de génération de signal audio (12) et comparant ceux-ci, de façon à obtenir un temps de retard audio du dispositif à tester ; et

un appareil de traitement (4), connecté à l'appareil de test de retard vidéo (31) et à l'appareil de test de retard audio (32), respectivement, de façon à obtenir une différence de temps entre le temps de retard vidéo et le temps de retard audio ;

**caractérisé par le fait que** l'appareil de génération de signal vidéo (11) comprend un générateur d'image à DEL (11a), le générateur d'image à DEL (11a) comprend au moins une ligne de N lumières DEL disposées le long d'une ligne droite ; et chacune des N lumières DEL est éclairée en séquence à une fréquence f dans la même direction que celle selon laquelle s'étendent les lumières DEL, et un temps d'éclairage pour chacune des lumières DEL est 1/(N*f), et le temps de retard vidéo est :

$$T_3 = \frac{n}{f} + (n-1) * \frac{1}{N*f}, n \geq 1$$

$T_3 = 0$, n=0 ;

$T_3$ étant le temps de retard vidéo, N étant un entier positif supérieur ou égal à 5, n étant une différence de numéro de séquence entre la séquence de la lumière DEL éclairée par une image d'impulsion du signal de test d'image en temps réel et la séquence de la lumière DEL éclairée par l'image d'impulsion du signal de test d'image de transmission, et n étant un nombre naturel, et une plage d'erreur de $T_3$ étant $0-2*\dfrac{1}{N*f}$ .

2. - Système de test de synchronisation audio et vidéo selon la revendication 1, comprenant en outre :

un appareil de détermination, connecté à l'appareil de traitement (4) ;
dans lequel la différence de temps et une table de données correspondant à des paramètres de performance de synchronisation audio et vidéo sont préenregistrés dans l'appareil de détermination, et l'appareil de détermination reçoit la différence de temps et récupère les paramètres de synchronisation audio et vidéo correspondant à la différence de temps, à partir de la table de données, en fonction de la différence de temps, et délivre en sortie les paramètres de synchronisation audio et vidéo récupérés ;
l'appareil de traitement (4) calcule la différence de temps selon une formule $\Delta T = T_1 - T_2$ ;
$\Delta T$ étant la différence de temps, $T_1$ étant le temps de retard audio, $T_2$ étant le temps de retard vidéo, et les unités de temps de $\Delta T$, $T_1$ et $T_2$ étant les mêmes ;
lorsqu'une valeur de $\Delta T$ est 0, les paramètres de performance de synchronisation audio et vidéo délivrés en sortie par l'appareil de détermination sont les paramètres optimaux de la performance de synchronisation audio et vidéo ;
lorsque la valeur de $\Delta T$ est une valeur négative, les paramètres de performance de synchronisation audio et vidéo délivrés en sortie par l'appareil de détermination sont $\Delta T$ millisecondes obtenues par un signal vidéo en retard sur un signal audio transmis simultanément par le dispositif à tester ; et
lorsque la valeur de $\Delta T$ est une valeur positive, les paramètres de performance de synchronisation audio et vidéo délivrés en sortie par l'appareil de détermination sont $\Delta T$ millisecondes obtenues par le signal audio en retard sur le signal vidéo transmis simultanément par le dispositif à tester ; et
toutes les unités de temps de $\Delta T$, $T_1$ et $T_2$ étant des millisecondes.

3. - Système de test de synchronisation audio et vidéo selon la revendication 2, dans lequel l'appareil de traitement (4) obtient la différence de temps sur la base du temps de retard audio.

4. - Système de test de synchronisation audio et vidéo selon la revendication 1, dans lequel le dispositif à tester (2) comprend une unité d'acquisition d'image (21), une unité de transmission vidéo (22) et une unité d'affichage d'image (23), et l'appareil de test de retard vidéo (31) comprend une unité d'acquisition vidéo (311), une première unité de comparaison (312) et une première unité de calcul (313) ;
dans lequel le générateur d'image à DEL (11a) génère le signal de test d'image ; l'unité d'acquisition d'image (21) collecte le signal de test d'image et l'unité de transmission vidéo (22) transmet le signal de test d'image à l'unité d'affichage d'image (23) pour afficher le signal de test d'image de transmission ; l'unité d'acquisition vidéo (311) collecte simultanément un signal de test d'image en temps réel généré actuellement par le générateur d'image à DEL (11a) et le signal de test d'image de transmission affiché actuellement dans l'unité d'affichage d'image (23) ; la première unité de comparaison (312) compare le signal de test d'image en temps réel collecté au signal de test d'image de transmission ; et la première unité de calcul (313) obtient le temps de retard vidéo selon un résultat de comparaison délivré en sortie par la première unité de comparaison (312), et délivre en sortie le temps de retard vidéo à l'appareil de traitement (4).

5. - Système de test de synchronisation audio et vidéo selon la revendication 4, dans lequel la valeur de fréquence f, à laquelle les lumières DEL sont allumées, est supérieure ou égale à la valeur de la fréquence de trames de résolution de vision humaine, et une valeur de la fréquence de trames de l'image collectée par l'unité d'acquisition d'image est supérieure à la valeur de la fréquence f.

6. - Système de test de synchronisation audio et vidéo selon la revendication 1, dans lequel l'appareil de génération de signal audio (12) comprend un générateur de signal audio (12a) ; le dispositif à tester (2) comprend en outre une unité d'acquisition de son (24), une unité de transmission audio (25) et une unité de lecture de son (26) ; et l'appareil de test de retard audio (32) comprend une unité d'acquisition audio (321) et une unité d'analyse audio (322) ;
dans lequel le générateur de signal audio (12a) génère le signal de test sonore ; l'unité d'acquisition de son (24) collecte le signal de test sonore et l'unité de transmission audio (25) transmet le signal de test sonore à l'unité de lecture de son (26) pour délivrer en sortie le signal de test sonore de transmission ; l'unité d'acquisition audio (321) collecte simultanément un signal de test sonore en temps réel généré actuellement par le générateur de signal audio (12a) et un signal de test sonore de transmission actuellement délivré en sortie par l'unité de lecture de son (26) ; après avoir analysé et traité le signal de test sonore en temps réel collecté par l'unité d'acquisition audio (321) et le signal de test sonore de transmission, l'unité d'analyse audio (322) délivre en sortie le temps de retard audio à l'appareil de traitement (4).

7. - Système de test de synchronisation audio et vidéo selon la revendication 6, dans lequel l'appareil de génération de signal audio (12) comprend en outre une bouche de simulation (12b, 12b') pour égaliser le signal de test sonore généré par le générateur de signal audio (12a, 12a'), et l'unité d'acquisition de son (24) collecte le signal de test sonore égalisé ; et

l'unité d'acquisition audio (321) comprend un microphone en champ libre (321a, 321a'), l'unité d'analyse audio (322) comprend un analyseur audio (322a, 322a'), et l'analyseur audio (322a) délivre en sortie le temps de retard audio sur la base du signal de test sonore de transmission collecté par le microphone en champ libre (321a, 321a') ;
le dispositif à tester (2) comprend deux terminaux mains libres (21, 22) d'un équipement d'interphone visuel de bâtiment (2a), un angle entre le générateur de signal audio (12a/12a') et la bouche de simulation (12b/12b') configurés pour générer le signal de test sonore, et le microphone en champ libre (321a'/321a) et l'analyseur audio (322a'/322a) configurés pour recevoir le signal de test sonore dans le même terminal mains libres (21/22) est supérieur ou égal à 32°, et une distance entre la bouche de simulation (12b/12b') et/ou le microphone en champ libre (321a/321a') et le terminal mains libres (21/22) est supérieure ou égale à 10 cm et inférieure à 50 cm.

8. - Procédé de test de synchronisation audio et vidéo à l'aide du système selon l'une quelconque des revendications 1 à 7, **caractérisé par le fait que** le procédé comprend les étapes :

une fois qu'un appareil de génération de signal vidéo (11) a généré un signal de test d'image, le dispositif à tester (2) collecte et transmet le signal de test d'image à une première extrémité de sortie du dispositif à tester (2), de façon à délivrer en sortie un signal de test de transmission d'image ;
collecter respectivement le signal de test d'image de transmission délivré en sortie par le dispositif à tester (2) et un signal de test d'image en temps réel généré actuellement par l'appareil de génération de signal vidéo (11), et comparer ceux-ci à l'aide d'un appareil de test de retard vidéo (31), de façon à obtenir un temps de retard vidéo du dispositif à tester (2) ;
une fois qu'un appareil de génération de signal audio (12) a généré un signal de test sonore, le dispositif à tester (2) collecte et transmet le signal de test sonore à une seconde extrémité de sortie du dispositif à tester (2), de façon à délivrer en sortie un signal de test sonore de transmission ;
collecter respectivement le signal de test sonore de transmission délivré en sortie par le dispositif à tester (2) et un signal de test sonore en temps réel généré actuellement par l'appareil de génération de signal audio (12) et comparer ceux-ci à l'aide d'un appareil de test de retard audio (32), de façon à obtenir un temps de retard audio du dispositif à tester (2) ; et
un appareil de traitement (4) qui reçoit et calcule une différence de temps entre le temps de retard vidéo et le temps de retard audio.

9. - Procédé de test de synchronisation audio et vidéo selon la revendication 8, comprenant en outre les étapes :

disposer un appareil de détermination dans lequel la différence de temps et une table de données correspondant à des paramètres de performance de synchronisation audio et vidéo sont préenregistrés ;
l'appareil de détermination reçoit la différence de temps et récupère les paramètres de synchronisation audio et vidéo correspondant à la différence de temps, à partir de la table de données, en fonction de la différence de temps, et délivre en sortie les paramètres de synchronisation audio et vidéo récupérés ;
l'appareil de traitement (4) calcule la différence de temps selon une formule $\Delta T = T_1 - T_2$ ;
$\Delta T$ étant la différence de temps, $T_1$ étant le temps de retard audio, $T_2$ étant le temps de retard vidéo, et les unités de temps de $\Delta T$, T1 et T2 étant les mêmes ;
lorsqu'une valeur de $\Delta T$ est 0, l'appareil de détermination délivre en sortie des paramètres optimaux de performance de synchronisation audio et vidéo du dispositif à tester ;
lorsque la valeur de $\Delta T$ est une valeur négative, l'appareil de détermination délivre en sortie $\Delta T$ millisecondes obtenues par un signal vidéo en retard sur un signal audio transmis simultanément par le dispositif à tester ; et
lorsque la valeur de $\Delta T$ est une valeur positive, l'appareil de détermination délivre en sortie $\Delta T$ millisecondes

obtenues par le signal audio en retard sur le signal vidéo transmis simultanément par le dispositif à tester ; et toutes les unités de temps de $\Delta T$, $T_1$ et $T_2$ étant des millisecondes.

10. - Procédé de test de synchronisation audio et vidéo selon la revendication 9, dans lequel l'appareil de traitement (4) calcule la différence de temps sur la base du temps de retard audio et délivre en sortie la différence de temps.

Figure 1

Figure 2

21

Figure 3

Figure 4

Figure 5

After a video signal generating apparatus generates an image test signal, the device to be tested collects and transmits the image test signal to a first output end of the device to be tested, so as to output an image transmission test signal;

a video delay test apparatus respectively collects the transmission image test signal output by the device to be tested and a real-time image test signal currently generated by the video signal generating apparatus and compares the same, so as to obtain a video delay time of the device to be tested;

after an audio signal generating apparatus generates a sound test signal, the device to be tested collects and transmits the sound test signal to a second output end of the device to be tested, so as to output a transmission sound test signal;

an audio delay test apparatus respectively collects the transmits the sound test signal output by the device to be tested and a real-time sound test signal currently generated by the audio signal generating apparatus and comparing the same, so as to obtain an audio delay time of the device to be tested; and

respectively acquiring the video delay time and the audio delay time to calculate the time difference between the video delay time and the audio delay time and to output the time difference.

Figure 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006127053 A1